# EUROPEAN PATENT APPLICATION

(11) **EP 2 602 652 A1**
(43) Date of publication of application: **12.06.2013**
(21) Application number: 11814237.1
(22) Date of filing: 30.06.2011
(51) Int. Cl.: G02C 5/12

(54) **NOSE PAD AND EYEWEAR**

(30) Priority: 05.08.2010 JP 2010176603
(71) Applicant: Jin Co., Ltd., Maebashi-shi, Gunma 371-0046 (JP)
(72) Inventor: TANAKA, Hitoshi, Tokyo 150-0001 (JP)
(74) Representative: Pfenning, Meinig & Partner GbR
(86) International application number: PCT/JP2011/003761
(87) International publication number: WO 2012/017597

(57) **Abstract**

Provided is a nose pad that positions eyewear relative to a face, comprising a front surface that is on a nose side when the eyewear with the attached nose pad is worn on the face; and a back surface that has a periphery that contacts a periphery of the front surface, and is on a side of a nose pad attaching portion that attaches the nose pad to the eyewear. The front surface includes a contact surface that contacts the nose when the eyewear is worn on the face, and an extending surface that extends from the contact surface in a forward direction of the face and faces in the forward direction.

## Description

### TECHNICAL FIELD

The present invention relates to a nose pad and eyewear.

### BACKGROUND ART

A known nose pad for positioning glasses relative to the face of a user includes a board-shaped pad body and a pad core provided at the center of the pad body. In recent years, the surface of the pad body has been matched to the curved surface of the nose, in an attempt to disperse the load from the glasses across the entire pad (for example, see Patent Document 1).
Patent Document 1: Japanese Patent Application Publication No. 2006-106273

### DISCLOSURE OF THE INVENTION

### PROBLEMS TO BE SOLVED BY THE INVENTION

By matching the front surface of the pad body to the curved front surface of the nose, the feeling of stability when the frame is worn on the face is improved, but an even greater feeling of stability is desired. Therefore, it is an object of an aspect of the innovations herein to provide a test apparatus and a test method, which are capable of overcoming the above drawbacks accompanying the related art. The above and other objects can be achieved by combinations described in the independent claims. The dependent claims define further advantageous and exemplary combinations of the innovations herein.

### MEANS FOR SOLVING THE PROBLEMS

In order to solve the above, according to a first aspect of the present invention, provided is a nose pad that positions eyewear relative to a face, comprising a front surface that is on a nose side when the eyewear with the attached nose pad is worn on the face; and a back surface that has a periphery that contacts a periphery of the front surface, and is on a side of a nose pad attaching portion that attaches the nose pad to the eyewear. The front surface includes a contact surface that contacts the nose when the eyewear is worn on the face, and an extending surface that extends from the contact surface in a forward direction of the face and faces in the forward direction.

In the nose pad described above, the extending surface may include an extending contact surface that contacts skin at a nose bone depression at a base of a nose when the eyewear is worn on the face. The nose pad described above may include a protruding portion that protrudes in a backward direction, which is a direction opposite the forward direction, beyond the nose pad attaching portion when the eyewear is worn on the face. In the nose pad described above, at least one of a region of the protruding portion that is above the nose pad attaching portion when the eyewear is worn on the face and a region of the protruding portion below the nose pad attaching portion when the eyewear is worn on the face may be depressed in a forward direction when the eyewear is worn on the face.

In the nose pad described above, the back surface may include a first side on which the nose pad attaching portion is arranged and a second side that has at least a portion thereof extending from the first side and faces a side surface of the nose pad attaching portion. In the nose pad described above, the front surface may contact the periphery of the second side and protrudes in a direction opposite the first side.

According to a second aspect of the present invention, provided is a nose pad that positions eyewear relative to a face, comprising a protruding portion that protrudes in a backward direction, which is a direction opposite a forward direction from the face, beyond a nose pad attaching portion that attaches the nose pad to the eyewear, when the eyewear is worn on the face. At least one of a region of the protruding portion that is above the nose pad attaching portion when the frame is worn on the face and a region of the protruding portion below the nose pad attaching portion when the frame is worn on the face is depressed in a forward direction when the eyewear is worn on the face.

According to a third aspect of the present invention, provided is eyewear that is worn on the face, comprising the nose pad described above.

The summary clause does not necessarily describe all necessary features of the embodiments of the present invention. The present invention may also be a subcombination of the features described above.

### BRIEF DESCRIPTION OF THE DRAWINGS

Fig. 1 is a schematic view of glasses 100.
Fig. 2 schematically shows an exemplary enlarged view of a portion of the bridge region as seen from the front.
Fig. 3 schematically shows an exemplary enlarged view of a portion of the bridge region as seen from the back.
Fig. 4 schematically shows an exemplary perspective view of a nose pad 160 as seen from the rear.
Fig. 5 schematically shows an exemplary perspective view of the nose pad 160 as seen from the front.
Fig. 6 schematically shows an exemplary positional relationship between the nose pad 160 and the nose 12 of the user, in a state where the frame 120 is worn on the face 10 of the user.
Fig. 7 schematically shows an example of the nose pad 160 as seen from the front surface 402.
Fig. 8 schematically shows an example of the nose pad 160 as seen from the back surface 404 side.
Fig. 9 schematically shows an example of a cross section of the nose pad 160 over the plane A-A'.
Fig. 10 schematically shows an example of a cross section of the nose pad 160 over the plane B-B'.

### BEST MODE FOR CARRYING OUT THE INVENTION

Hereinafter, some embodiments of the present invention will be described. The embodiments do not limit the invention according to the claims, and all the combinations of the features described in the embodiments are not necessarily essential to means provided by aspects of the invention. The following references the drawings to describe embodiments and portions that are identical or similar in different drawings are given the same reference numeral, while redundant explanations are omitted. The drawings are schematic representations, and do not necessarily indicate the actual dimensions of objects. For ease of explanation, there may be cases where different portions in different drawings are represented in different scales.

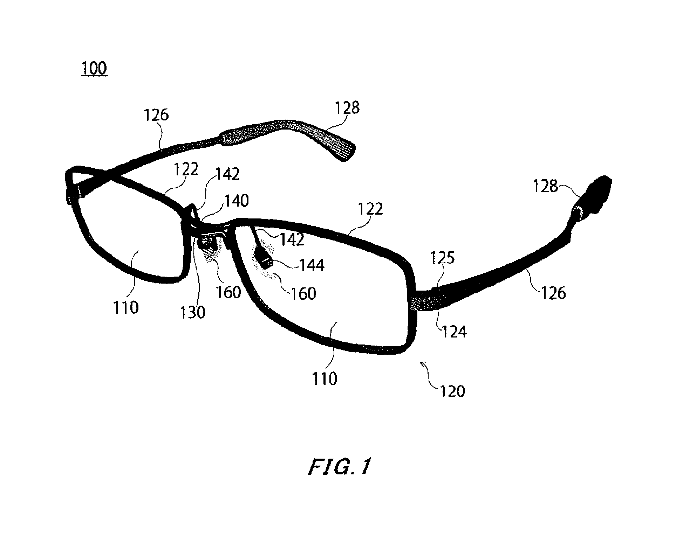

Fig. 1 is a schematic view of glasses 100. The glasses 100 include lenses 110 and a frame 120. The glasses 100 may include a pair of lenses 110. The glasses 100 and the frame 120 are one example of eyewear.

The frame 120 holds a pair of lenses 110. The frame 120 may include a rim 122, end pieces 124, hinges 125, temples 126, ear pads 128, a first bridge 130, a second bridge 140, pad arms 142, pad holders 144, and nose pads 160. The pad holders 144 are examples of a nose pad holding portion.

The rims 122, end pieces 124, hinges 125, temples 126, and ear pads 128 are provided as pairs, with one of each on the right side and the left side. The rims 122 hold the lenses 110. The end pieces 124 are provided outside the rims 122 and hold the temples 126 in a rotatable manner via the hinges 125. The temples 126 press against the head of a user above the ears, and grip this region. The ear pads 128 are provided at the tips of the temples 126.

The first bridge 130 connects the pair of lenses 110. The second bridge 140 connects the pair of lenses 110. Therefore, when pressure is applied to the frame 120 from the outside, the pressure applied to the connection portions between the second bridge 140 and the lenses 110 or rims 122 can be decreased. This effect is particularly noticeable when the second bridge 140 and the pad arms 142 are formed integrally.

Here, connecting the pair of lenses refers not only to directly connecting the lenses to each other, but also to indirectly connecting the lenses to each other. For example, connecting the lenses includes a case of connecting the rims, which hold the lenses, to each other. The first bridge 130 may connect the rims to each other, and the second bridge 140 may connect the lenses to each other. The pair of lenses may be two lenses that are physically separated from each other, or may be connected and formed integrally.

Here, "connecting" refers to attachment resulting in a continuous structure, and may refer to attaching the pair of lenses or rims by firmly fixing the first bridge 130 or second bridge 140 to the pair of lenses or rims using brazing, screwing, or interlocking, for example. Furthermore, "connecting" does not include a case in which the first bridge 130 or second bridge 140 is merely in contact with the pair of lenses or rims.

The second bridge 140 may be formed integrally with the pad arms 142. The pad arms 142 may be formed by extending the ends of the second bridge 140. The pad arms 142 may hold the nose pads 160. One end of each pad arm 142 may be connected to a pad holder 144. The pad arms 142 may include rod-shaped portions that extend in a straight line from the pad holders 144. The pad arms 142 may position the frame 120 relative to the face of the user of the glasses 100.

Here, forming the second bridge 140 and the pad arms 142 integrally can be exemplified by a case in which the second bridge 140 and the pad arms 142 are manufactured by shaping a single piece of material, or a case in which the second bridge 140 and the pad arms 142 are manufactured using the same process, e.g. casting or pressing. Even if the second bridge 140 and the pad arms 142 are manufactured separately and then attached to form a single member, as long as the second bridge 140 and the pad arms 142 are not attached at different positions of the rims 122 or lenses 110, the second bridge 140 and the pad arms 142 are still considered as being formed integrally.

The pad holders 144 hold the nose pads 160. The pad holders 144 may hold the nose pads 160 to be movable. The pad holders 144 may house a portion of the nose pads 160. There may be a gap between the pad holders and the portion of the nose pads 160 housing the pad holders 144. The nose pads 160 contact the nose of the user of the glasses 100, and position the frame 120 relative to the face of the user of the glasses 100.

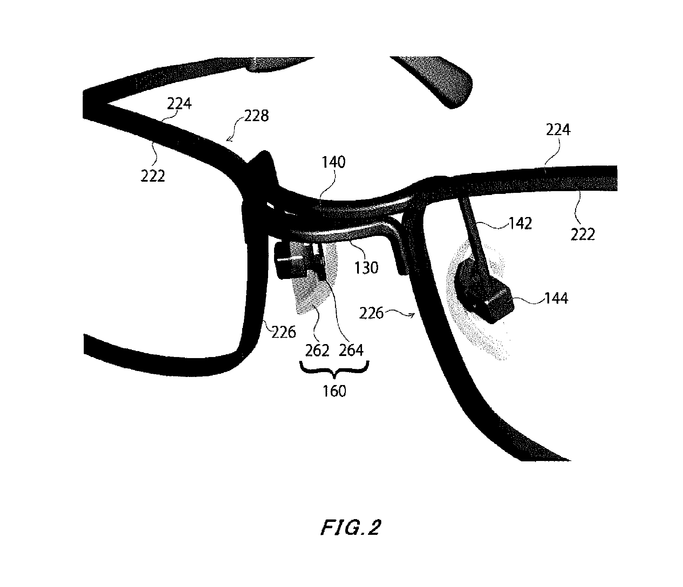

Fig. 2 schematically shows an exemplary enlarged view of a portion of the bridge region as seen from the front. As shown in Fig. 2, the nose pads 160 may each include a nose pad body 262 and a nose pad attaching portion 264. The nose pad bodies 262 may include resin such as polyester or silicon resin, or may include metal such as titanium.

The nose pad attaching portions 264 attach the nose pad bodies 262 to the frame 120. The nose pad attaching portions 264 are connected to the nose pad bodies 262, and a portion of the nose pad attaching portions 264 are housed within the pad holder 144 and fixed to allow pivoting by screws, for example, thereby attaching the nose pads 160 to the frame 120. The nose pad attaching portions 264 may be arranged above the nose pad bodies 262, and a portion of the nose pad attaching portions 264 may be embedded in the nose pad bodies 262. The nose pad bodies 262 and the nose pad attaching portions 264 may be formed integrally.

In the present embodiment, the first bridge 130 is attached to the front surface 222 of the rim 122. The second bridge 140 is attached to the corners of the back surface 228 and the opposing surfaces 226 of the rim 122. When the frame 120 is seen from the front, the first bridge 130 and the second bridge 140 are connected to the pair of lenses 110 at a position where at least a portion of the first bridge 130 and the second bridge 140 overlap. By attaching the first bridge 130 and the second bridge 140 to different surfaces on the respective rims 122, the connection between the first bridge 130 and the rims 122 and the connection between the second bridge 140 and the rims 122 can reinforce each other in a complementary manner.

The present embodiment describes a case in which the second bridge 140 is connected to the corners of the back surface 228 and the opposing surfaces 226 of the rim 122, but the method for attaching the first bridge 130 and the second bridge 140 is not limited to this. The first bridge 130 and the second bridge 140 need only be attached to different surfaces on the respective rims 122. For example, the second bridge 140 may be attached only to the opposing surfaces 226 of the rims 122. The first bridge 130 may be attached to the opposing surfaces 226 of the rims 122, and the second bridge 140 may be attached to the front surfaces 222, the top surfaces 224, or the back surfaces 228 of the rims 122.

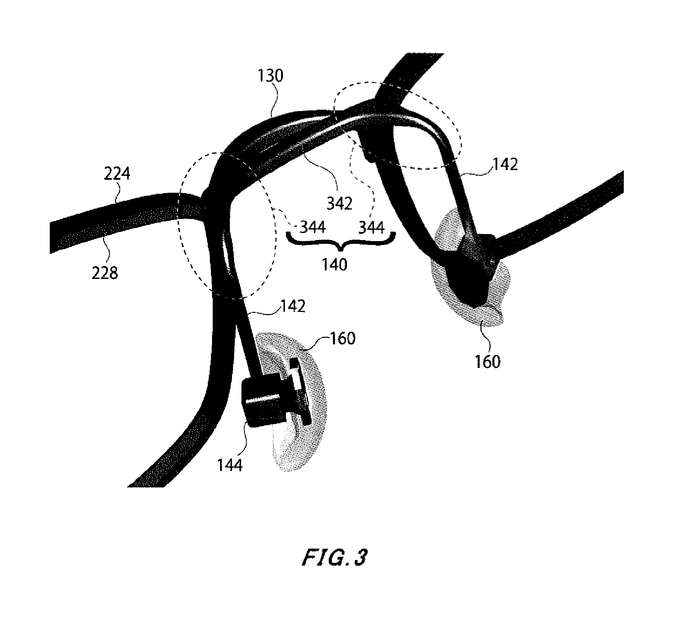

Fig. 3 schematically shows an exemplary enlarged portion of the bridge region as seen from the back. As shown in Fig. 3, the second bridge 140 may include a connecting portion 342 that connects the pair of lenses 110 and bending portions 344 that are arranged between the connecting portion 342 and respective pad arms 142. The bending portions 344 extend from the connecting portions 342 in a direction substantially parallel to the front and back direction of the frame 120, and may curve in a downward direction of the frame 120 at the end portions of the pad arms 142.

The width or thickness of the connecting portion 342 may be greater than the width or thickness of the pad arms 142. The width or thickness of the bending portions 344 may gradually decrease in a direction from the sides connected to the connecting portion 342 to the sides connected to the pad arms 142. As shown in Fig. 3, the pad arms 142 may extend in a straight line from the bending portions 344 toward the pad holders 144.

In this way, the length of the portion of each pad arm 142 extending in a straight ling can be increased, and the bending of the pad arms 142 can be increased. As a result, the nose pads 160 can grip the nose more softly and more reliably. The positions of the nose pads 160 in the front to back direction of the face can be adjusted easily. Furthermore, the nose bone has a depression near the base of the nose. As a result of the pad arms 142 bending in the front and back direction of the face, the nose pads 160 can press against the sides of the face in a sideways direction only at this depression. Therefore, the feeling of stability when the frame 120 is worn can be increased.

The present embodiment describes a case in which the eyewear is a pair of glasses. However, the eyewear is not limited to this. The eyewear may be any accessory relating to the eyes including glasses, sun glasses, goggles, and head-mounted displays, as well as head-mounted accessories or face-mounted accessories such as frames.

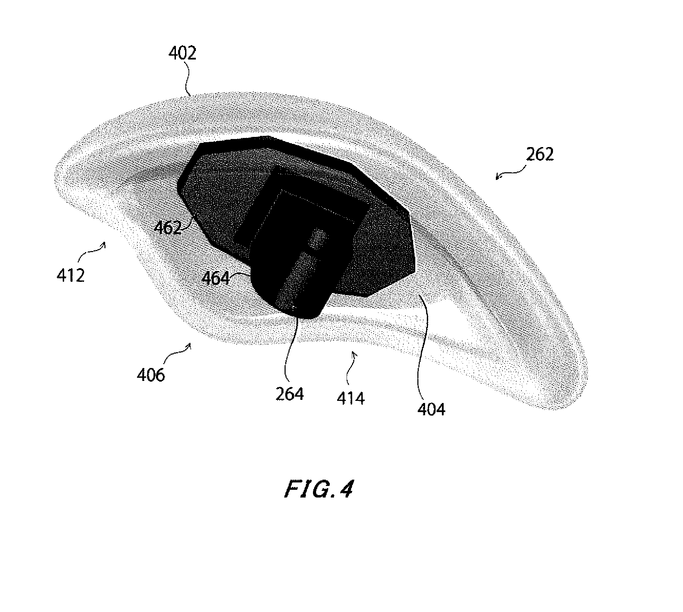

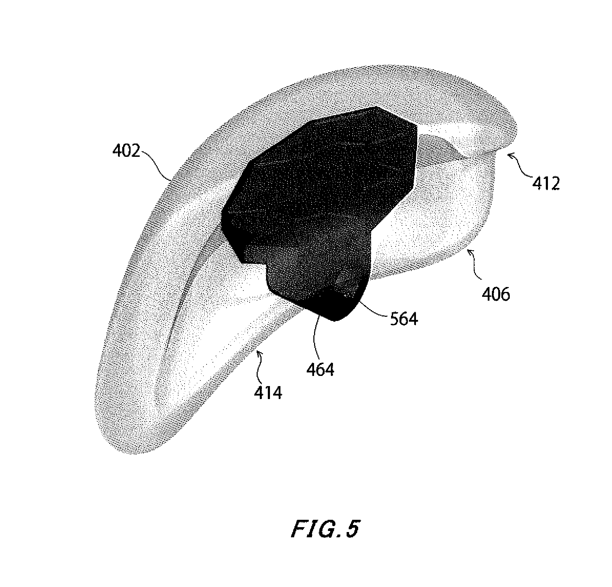

Fig. 4 schematically shows an exemplary perspective view of a nose pad 160 as seen from the rear. Fig. 5 schematically shows an exemplary perspective view of the nose pad 160 as seen from the front. Figs. 4 and 5 show a case in which transparent or semitransparent material is used for the nose pad body 262. As shown in Fig. 4, the nose pad body 262 includes a front surface 402 and a back surface 404. The nose pad attaching portion 264 includes a core 462 and a housing portion 464.

In this Specification, when the frame 120 with attached nose pads 160 is worn on the face of the user, the direction toward the top of the head is referred to as "up" and the direction toward the front is referred to as "forward." Furthermore, "up" refers to a wide range spanning from the front to back of the user, and "forward" refers to a wide range spanning from the right hand direction to the left hand direction of the user. The direction that is the opposite of "up" is referred to as "down" and the direction that is the opposite of "forward" is referred to as "backward."

With the user wearing the frame 120 with the attached nose pads 160 standing vertically on a horizontal surface, the upper portion of the nose pad body 262 refers to the portion above a dividing plane that passes through the center of the nose pad attaching portion 264 and divides the nose pad body 262 into top and bottom portions with a plane parallel to the horizontal surface. With the user wearing the frame 120 with the attached nose pads 160 standing vertically on a horizontal surface, the front portion of the nose pad body 262 refers to the portion that is further forward than a dividing plane that passes through the center of the nose pad attaching portion 264 and divides the nose pad body 262 into front and back portions with a plane parallel to the left and right directions of the user.

The center of the nose pad attaching portion 264 may be a point at which the center of mass of the core 462 or housing portion 464 is projected onto the back surface 404 of the nose pad body 262. If the point at which the center of mass of the core 462 is projected onto the back surface 404 of the nose pad body 262 and the point at which the center of mass of the housing portion 464 is projected onto the back surface 404 of the nose pad body 262 are significantly different positions, the point at which the center of mass of the housing portion 464 is projected onto the back surface 404 of the nose pad body 262 may be used as the center of the nose pad attaching portion 264. If the nose pad attaching portion 264 is formed integrally with the nose pad body 262, the point at which the center of mass of the portion corresponding to the housing portion 464 is projected onto the back surface 404 of the nose pad body 262 may be the center of the nose pad attaching portion 264.

The nose pad body 262 may be shaped such that a portion thereof is curved from the front surface 402 side to the back surface 404 side. The nose pad body 262 may be shaped as a boat formed by cutting a hollow body with a substantially elliptical shape in half. The thickness of the nose pad body 262 may gradually increase from the ends of the nose pad attaching portion 264 toward the center, and may have the greatest thickness near the center of the nose pad attaching portion 264. In this way, a soft and comfortable fit can be achieved.

The nose pad body 262 may include the nose pad attaching portion 264 arranged in the portion corresponding to the floor of the boat. The nose pad body 262 may be shaped such that a portion of the region corresponding to a wall of the boat is cut out. In this way, the skin pressed by the nose pad body 262 can move to the outside of the nose pad body 262. The nose pad body 262 may be shaped such that a portion of the region corresponding to a wall at the rear of the boat is cut out. In this way, when the nose pad 160 is attached to the frame 120, the nose pad 160 can be fixed by a screw or the like from the back surface of the frame 120.

The front surface 402 is the surface that is on the nose side when the frame 120 having the attached nose pad 160 is worn on the face, and a portion of the front surface 402 contacts the nose. The front surface 402 may be formed by a plurality of surfaces with different curvatures. The front surface 402 may be formed by smoothly combining a plurality of curved surfaces. The front surface 402 may be shaped to correspond to the shape of the region near the nose on the face. The shape of the front surface 402 may be designed based on the model of a human head.

The human head model can be manufactured using the following process, for example. The three-dimensional shapes of the heads of a plurality of people are measured, and a plurality of anatomically corresponding data points are extracted from the measurement data. The three-dimensional shape of a head may be formed by aggregating measurement data from tens of people. The gender and age of the measurement subjects may be set as needed. The number of data points may be from 400 to 500 for the three-dimensional shape of each person. By averaging the position of each data point, the human head model can be manufactured. The human head model may be a physical model, or may be data that is stored in a storage device or storage medium, such as a memory, a magnetic disk, an optical disk, or a magneto-optical disk.

The back surface 404 is a surface of the nose pad attaching portion 264, and faces the pad holder 144 when the nose pad 160 is attached to the frame 120. The periphery of the back surface 404 contacts the periphery of the front surface 402. The back surface 404 may be formed by a plurality of surfaces having different curvatures.

The nose pad body 262 may include a protruding portion 406 that protrudes backward beyond the nose pad attaching portion 264 when the frame 120 is worn on the face. In this way, when the user wears the frame 120, the nose pad attaching portion 264 can be prevented from directly contacting the eye, nose, or face.

At least one of a region of the protruding portion 406 that is above the nose pad attaching portion 264 when the frame 120 is worn on the face and a region of the protruding portion 406 below the nose pad attaching portion 264 when the frame 120 is worn on the face may be depressed in a direction that is forward when the frame 120 is worn on the face.

In the present embodiment, the protruding portion 406 includes a recess 412 in a region that is above the center of the nose pad attaching portion 264 when the frame 120 is worn on the face and a recess 414 in a region that is below the center of the nose pad attaching portion 264 when the frame 120 is worn on the face. At the recess 412 and the recess 414, the protruding portion 406 is depressed in a forward direction when the frame 120 is worn on the face. As a result, when the user wears the frame 120, the skin pressed by the nose pad 160 is released from the recess 412 and the recess 414, thereby realizing a comfortable fit. Furthermore, by depressing the protruding portion 406 at a plurality of locations, the contact surface area between the protruding portion 406 and the face can be decreased, thereby realizing a more comfortable fit.

The core 462 may be connected to the nose pad body 262. The core 462 may be connected to the housing portion 464. In the present embodiment, the core 462 is shaped as a board. The core 462 is horizontally symmetrical. The core 462 is embedded in the nose pad body 262. The point at which the center of mass of the core 462 is projected onto the back surface 404 of the nose pad body 262 is substantially the same as the point at which the center of mass of the housing portion 464 is projected onto the back surface 404 of the nose pad body 262. The core 462 is not limited to this structure. For example, the core 462 may be horizontally asymmetric.

A portion of the housing portion 464 may be housed in the pad holder 144. The housing portion 464 may be fixed to the pad holder 144 in a manner to allow pivoting. The housing portion 464 may include a through-hole 564. The through-hole 564 is an example of a connection location where the pad holder 144 connects to the housing portion 464. The housing portion 464 may be fixed to the pad holder by a screw or the like that passes through the through-hole 564 and has an outer diameter that is smaller than the inner diameter of the through-hole 564. The present embodiment describes an example in which the housing portion 464 is inserted into the pad holder 144, but the nose pad attaching portion 264 and nose pad holding section are not limited to this.

The minimum value for the height from the portion corresponding to the floor of the boat to the inner surface of the through-hole 564 may be less than the maximum value of the height from the portion corresponding to the floor of the boat to the portion corresponding to the wall of the boat. The maximum value of the height from the portion corresponding to the floor of the boat to the inner surface of the through-hole 564 may be less than the maximum value of the height from the portion corresponding to the floor of the boat to the portion corresponding to the wall of the boat. With this structure, the surface area of the portion of the front surface 402 contacting the walls of the boat is increased, and therefore the nose pad 160 can be easily adjusted and the adjustment time can be reduced.

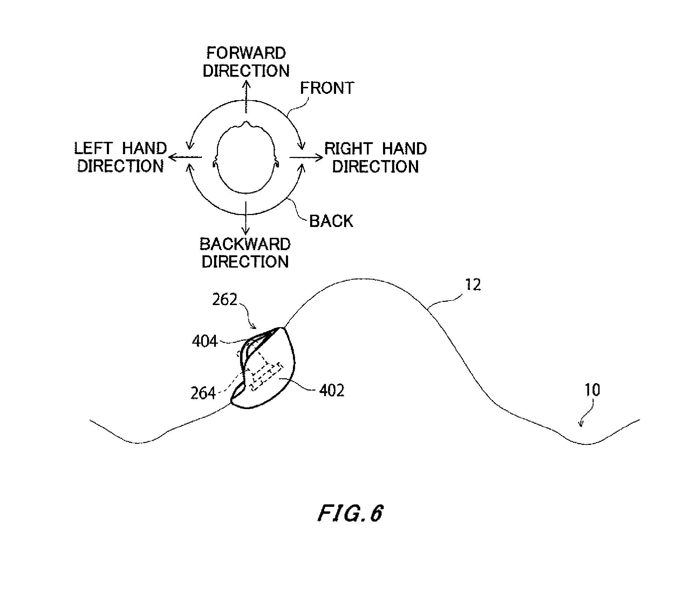

Fig. 6 schematically shows an exemplary positional relationship between the nose pad 160 and the nose 12 of the user, in a state where the frame 120 is worn on the face 10 of the user. Fig. 6 shows an example of the positional relationship between the nose pad 160 on the left side and the nose 12, as seen from above the head. For ease of explanation, Fig. 6 does not show the nose pad 160 on the right side.

The nose pad body 262 supports the load from the glasses 100 mainly near the center of the nose pad body 262. Therefore, conventionally, the shapes of the region below the center of the nose pad body 262 and the region to the back of the center of the nose pad body 262 were not considered to be important. For example, designs have been adopted in which a portion of the region below the center of the pad body is removed or in which the region behind the center of the pad body has an elliptical shape.

The inventor of the present invention focused on the depression of the nose bone at the base of the nose and, as a result of rigorous study, discovered that stability of the frame 120 when worn on the face can be greatly improved by matching the shape of the front surface 402 of the nose pad body 262 to the indentation of the nose bone at the base of the nose 12. In particular, the inventor discovered that by forming a region below and in front of the nose pad body 262 to have a surface that matches the shape of the side surface on the front of the depression of the nose bone, not only slipping of the frame 120 in the vertical direction but also slipping of the frame 120 in the front and back direction of the face 10 while the frame 120 is worn can be restricted. Yet further, the inventor discovered, as a result of rigorous study of the shape of the region behind the nose pad body 262, that by providing at least one of the recess 412 and the recess 414 in the region behind the nose pad body 262 as described above, a more comfortable fit can be achieved.

As shown in Fig. 6, in the present embodiment, the central region of the front surface 402 of the nose pad body 262 contacts the nose 12, and supports the load of the glasses 100. A portion of the region in front of and below the nose pad body 262 contacts the skin at the depression of the nose bone at the base of the nose 12, and restricts slipping of the glasses 100 in the front and back direction.

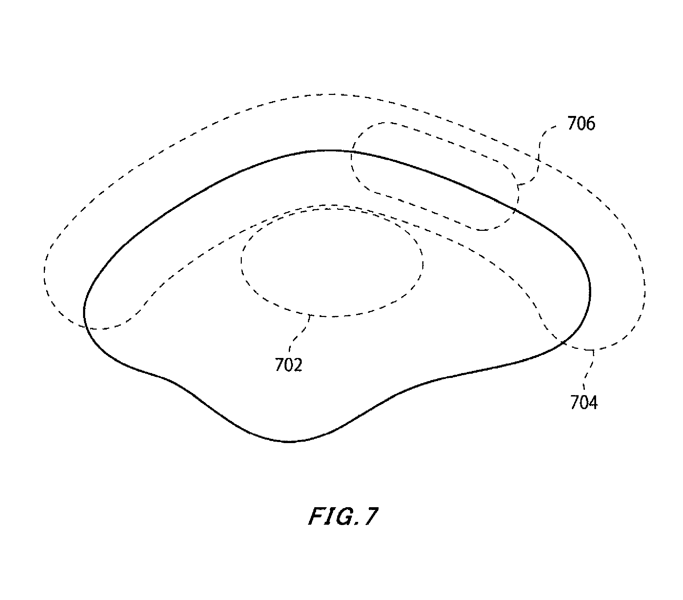

Fig. 7 schematically shows an example of the nose pad 160 as seen from the front surface 402. Fig. 7 schematically shows an example of a region of the front surface of the nose pad 160 contacting the nose bone depression at the base of the nose and a region forcefully contacting the nose of the user when the frame 120 is worn on the face 10 of the user.

As shown in Fig. 7, the front surface 402 has a contact surface 702 that contacts the nose when the frame 120 is worn on the face. The front surface 402 has an extending surface 704 that extends from the contact surface 702 toward the front of the face and faces forward. The extending surface 704 has an extending contact surface 706 that contacts the skin at the nose bone depression at the base of the nose when the frame 120 is worn on the face. The extending surface 704 may be a portion that contacts a wall of the boat described above.

Here, the direction and orientation of each surface refers to the direction of a normal vector of the surface with a unit length. The region on a side of the surface in the direction in which the vector points is a positive region, the side facing the positive region is the front of the surface, and the opposite side is the back of the surface. Furthermore, in the case of a surface made of multiple surfaces, it is assumed that the front surface can be seen.

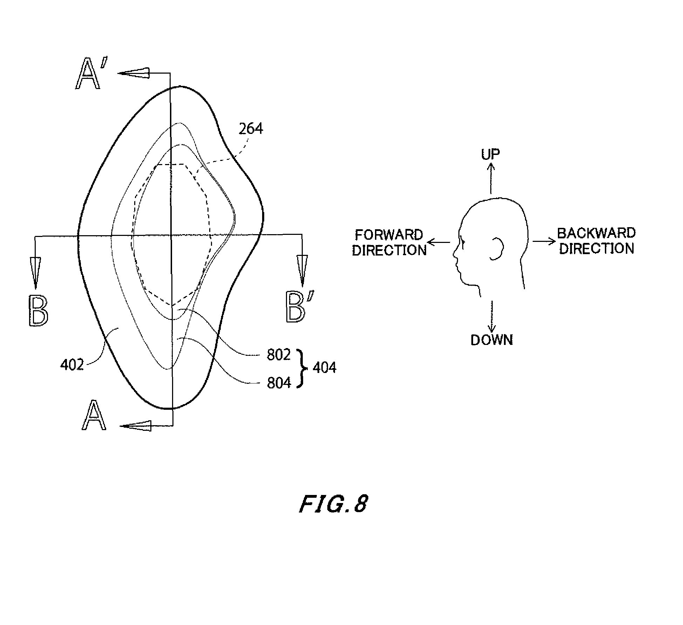

Fig. 8 schematically shows an example of the nose pad 160 as seen from the back surface 404 side. As shown in Fig. 8, the back surface 404 may include a first side 802 and a second side 804. The nose pad attaching portion 264 is arranged on the first side 802. The first side 802 may be a portion corresponding to the floor of the boat described above. The first side 802 may be a flat surface.

At least a portion of the second side 804 may extend from the first side 802 and face the side surface of the nose pad attaching portion 264. The second side 804 may include a surface forming a portion of the region corresponding to the walls of the boat described above. The region corresponding to the walls of the boat described above may extend toward the first side 802. The second side 804 may be formed by a plurality of surfaces having different curvatures.

The front surface 402 contacts the periphery of the second side 804, and includes a protrusion on the side opposite the direction in which the first side 802 faces. The front surface 402 may include a surface that faces in the same direction as the first side 802 and a surface that faces in the opposite direction of the first side 802.

The present embodiment describes an example in which a portion of the surface facing the same direction as the first side 802 is the second side 804 and the front surface 402 includes a portion of the surface facing the same direction as the first side 802. However, the front surface 402 and the back surface 404 are not limited to this. The second side 804 may be a surface that is different from the first side 802 and faces the same direction as the first side 802, and the front surface 402 may be formed by a surface facing the opposite direction of the first side 802.

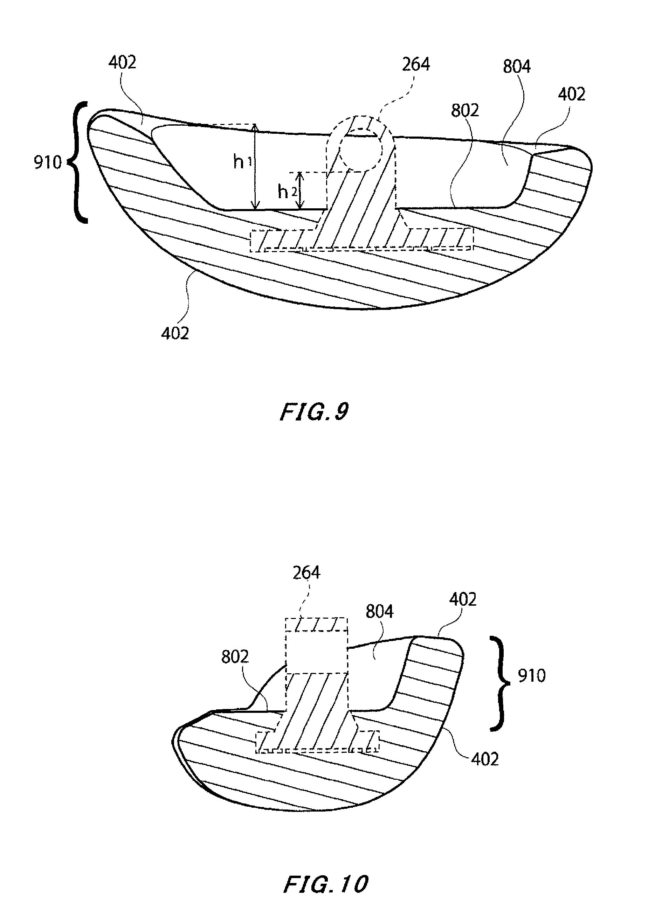

Fig. 9 schematically shows an example of a cross section of the nose pad 160 over the plane A-A' shown in Fig. 8. The cross-sectional plane A-A' passes through the center of the nose pad attaching portion 264. The reference numeral 910 in the center of the drawing indicates the portion corresponding to the walls of the boat described above.

As shown in Fig. 9, the maximum value h1 of the height from the first side 802 to the periphery of the second side 804 may be greater than the minimum value h2 of the height from the first side 802 to the inner surfaces of the through-hole 564. The maximum value h1 may be greater than the maximum value of the height from the first side 802 to the inner surfaces of the through-hole 564. The maximum value h1 of the height from the first side 802 to the periphery of the second side 804 may be measured at the front portion of the nose pad body 262. In particular, the maximum height h1 may be measured at the front bottom region of the nose pad body 262.

With these structures, the surface area of the region of the front surface 402 corresponding to the walls of the boat is increased. As a result, the nose pad 160 can be adjusted easily and the adjustment time can be decreased. The height from the first side 802 refers to the distance in a direction normal to the first side 802 with the first side 802 as the starting point.

The height from the first side 802 to the periphery of the second side 804 gradually increases in from the top (a direction to the right in Fig. 9) to the bottom (a direction to the left in Fig. 9). In this way, when the frame 120 is worn on the face, the surface area of the front surface 402 arranged near the nose bone depression can be increased. As a result, the nose pad 160 can be adjusted easily and the adjustment time can be decreased.

As shown in Fig. 9, the thickness of the nose pad body 262 increases from the ends to the center of the nose pad attaching portion 264, and the thickness is greatest near the center of the nose pad attaching portion 264. In this way, a softer and more comfortable fit is realized. The thickness of the nose pad body 262 refers to thickness in the direction normal to the surface of the back surface 404, with the surface of the back surface 404 as a starting point.

Fig. 10 schematically shows an example of a cross section of the nose pad 160 over the plane B-B' shown in Fig. 8. The cross-sectional plane B-B' passes through the center of the nose pad attaching portion 264. As shown in Fig. 10, the second side 804 may include a region where the height from the first side 802 to the periphery of the second side 804 is less than the minimum value h2 of the height from the first side 802 to the inner surface of the second side 804. This region may be provided to face the surface on which the through-hole 564 of the housing portion 464 is provided. This region may be provided in the back portion of the nose pad body 262. With these structures, when the nose pad 160 is attached to the frame 120, the nose pad 160 can be fixed by a screw or the like from the back surface of the frame 120.

As shown in Fig. 10, the thickness of the nose pad body 262 increases from the edges toward the center of the nose pad attaching portion 264, and is at a maximum near the center of the nose pad attaching portion 264. In this way, a softer and more comfortable fit can be achieved.

The above describes a nose pad that positions eyewear relative to a face, comprising a protruding portion that protrudes in a backward direction, which is a direction opposite a forward direction from the face, beyond a nose pad attaching portion that attaches the nose pad to the eyewear, when the eyewear is worn on the face. At least one of a region of the protruding portion that is above the nose pad attaching portion when the frame is worn on the face and a region of the protruding portion below the nose pad attaching portion when the frame is worn on the face is depressed in a direction that is forward when the frame is worn on the face. Also described is eyewear that is worn on the face and includes the nose pad.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### List of Reference Numerals

10: face, 12: nose, 100: glasses, 110: lens, 12: frame, 122: rim, 124: end piece, 125: hinge, 126: temple, 128: ear pad, 130: first bridge, 140: second bridge, 142: pad arm, 144: pad holder, 160: nose pad, 222: front surface, 224: top surface, 226: opposing surface, 228: back surface, 262: nose pad body, 264: nose pad attaching portion, 342: connecting portion, 344: bending portion, 402: front surface, 404: back surface, 406: protruding portion, 412: recess, 414: recess, 462: core, 464: housing portion, 564: through-hole, 702: contact surface, 704: extending surface, 706: extending contact surface, 802: first side, 804: second side, 910: reference numeral

## Claims

1. A nose pad that positions eyewear relative to a face, comprising:
a front surface that is on a nose side when the eyewear with the attached nose pad is worn on the face; and
a back surface that has a periphery that contacts a periphery of the front surface, and is on a side of a nose pad attaching portion that attaches the nose pad to the eyewear, wherein
the front surface includes a contact surface that contacts the nose when the eyewear is worn on the face, and an extending surface that extends from the contact surface in a forward direction of the face and faces in the forward direction.

2. The nose pad according to Claim 1, wherein
the extending surface includes an extending contact surface that contacts skin at a nose bone depression at a base of a nose when the eyewear is worn on the face.

3. The nose pad according to Claim 1 or 2, comprising a protruding portion that protrudes in a backward direction, which is a direction opposite the forward direction, beyond the nose pad attaching portion when the eyewear is worn on the face, wherein
at least one of a region of the protruding portion that is above the nose pad attaching portion when the eyewear is worn on the face and a region of the protruding portion below the nose pad attaching portion when the eyewear is worn on the face is depressed in a forward direction when the eyewear is worn on the face.

4. The nose pad according to any one of Claims 1 to 3, wherein
the back surface includes a first side on which the nose pad attaching portion is arranged and a second side that has at least a portion thereof extending from the first side and faces a side surface of the nose pad attaching portion, and
the front surface contacts the periphery of the second side and protrudes in a direction opposite the first side.

5. A nose pad that positions eyewear relative to a face, comprising a protruding portion that protrudes in a backward direction, which is a direction opposite a forward direction from the face, beyond a nose pad attaching portion that attaches the nose pad to the eyewear, when the eyewear is worn on the face, wherein
at least one of a region of the protruding portion that is above the nose pad attaching portion when the frame is worn on the face and a region of the protruding portion below the nose pad attaching portion when the frame is worn on the face is depressed in a forward direction when the eyewear is worn on the face.

6. Eyewear that is worn on the face, comprising the nose pad according to any one of Claims 1 to 5.
